# FASCICULE DE BREVET EUROPEEN

(11) **EP 3 689 424 B1**
(45) Date de publication et mention de la délivrance du brevet: **01.09.2021**
(21) Numéro de dépôt: 20153880.8
(22) Date de dépôt: 27.01.2020
(51) Int. Cl.: A63B 69/00

(54) **PROCÉDÉ DE FABRICATION D'UNE STRUCTURE ARTIFICIELLE D'ESCALADE**
HERSTELLUNGSVERFAHREN EINER KÜNSTLICHEN KLETTERSTRUKTUR
METHOD FOR MANUFACTURING AN ARTIFICIAL CLIMBING STRUCTURE

(30) Priorité: 30.01.2019 FR 1900867
(43) Date de publication de la demande: 05.08.2020
(73) Titulaire: Masai, 38000 Grenoble (FR)
(72) Inventeur: RICHARD, Antoine, 38000 Grenoble (FR)
(74) Mandataire: INNOV-GROUP

(56) Documents cités:
- DE-U1- 9 317 804
- FR-A1- 2 596 658
- US-B1- 8 038 581

## Description

### Domaine technique

L'invention se rapporte au domaine technique des structures artificielles d'escalade (SAE), appelées également murs d'escalade.

L'invention trouve notamment son application dans des contextes scolaire, sportif et ludique («*fun climbing*»)*.*

### État de l'art

Un procédé de fabrication d'une structure artificielle d'escalade, connu de l'état de la technique, comporte les étapes :
A₀) prévoir une ossature, adaptée pour soutenir la structure artificielle d'escalade ;
B₀) monter au moins un panneau de structure, comprenant des motifs, sur l'ossature ;
C₀) monter au moins une prise d'escalade sur le panneau de structure de manière amovible.

Le ou les panneaux de structure définissent une surface d'escalade, ou surface à grimper. Les motifs sont des motifs d'ornement, classiquement peints sur le ou les panneaux de structure, et définissant la décoration et le thème de la structure artificielle d'escalade. Les prises d'escalade sont montées amovibles sur le ou les panneaux de structure de manière à modifier facilement les voies d'escalade.

Le document DE 93 17 804 U1 décrit une structure artificielle d'escalade, comportant une ossature, au moins un panneau de structure montée sur l'ossature, au moins un panneau de revêtement comportant des motifs et monté sur le panneau de structure, au moins une prise d'escalade montée sur le panneau de revêtement et fixée au panneau de structure à travers le panneau de revêtement de manière amovible.

Un tel procédé de l'état de la technique n'est pas entièrement satisfaisant dans la mesure où le changement de la décoration et du thème entraîne le remplacement des panneaux de structure, et par là-même des coûts élevés de dépose, de remplacement et de transport. En effet, seule l'ossature reste en place.

### Exposé de l'invention

L'invention vise à remédier en tout ou partie aux inconvénients précités. A cet effet, l'invention a pour objet un procédé de fabrication d'une structure artificielle d'escalade, comportant les étapes qui sont décrites à la revendication 1. L'invention a aussi pour objet une structure artificielle d'escalade comportant les caractéristiques de la revendication 13.

Ainsi, un tel procédé selon l'invention permet de dissocier les motifs du ou des panneaux de structure. Le changement de la décoration et du thème s'opère en remplaçant le ou les panneaux de revêtement ; l'ossature et le ou les panneaux de structure restant en place. Autrement dit, la décoration et le thème sont changés en remplaçant uniquement le ou les panneaux de revêtement. Un panneau de revêtement est beaucoup plus mince et léger -et donc plus facilement manipulable- qu'un panneau de structure. Les coûts de dépose, de remplacement et de transport sont par conséquent fortement réduits. Il est donc plus facile de mettre en place régulièrement de nouveaux thèmes et de nouvelles voies dans les salles d'escalade.

### Définitions

- Par « ossature », on entend l'ensemble des éléments formant une armature permettant de soutenir le ou les panneaux de structure, et par là-même la structure artificielle d'escalade. Pour une exploitation en France, l'ossature doit vérifier les propriétés mentionnées dans la norme française NF EN 12572.
- Par « panneau de structure », on entend un élément de structure permettant notamment de soutenir le poids d'un grimpeur. Le ou les panneaux de structure définissent la surface d'escalade. Pour une exploitation en France, le ou les panneaux de structure doivent vérifier les propriétés mentionnées dans la norme française NF EN 12572.
- Par « panneau de revêtement », on entend un élément de parement, de faible masse par rapport à un panneau de structure.
- Par « motifs », on entend des éléments visuels formant des représentations graphiques.
- Par « prise d'escalade », on entend tout type de prise d'escalade artificielle telle que les bacs, les plats, les poches, les pinces, les réglettes ou encore les volumes.

Le procédé selon l'invention peut comporter une ou plusieurs des caractéristiques suivantes.

Selon une caractéristique de l'invention, l'étape c) est exécutée de sorte que les motifs sont imprimés sur le panneau de revêtement.

Par « imprimés », on entend des motifs reproduits par toute technique d'impression, par exemple une technique d'impression à encre, une technique d'impression à toner, ou encore une technique de sérigraphie.

Ainsi, un avantage procuré par des motifs imprimés est de pouvoir standardiser facilement des voies d'escalade, en les enregistrant préalablement par voie numérique, ce qui peut être intéressant notamment pour créer des défis inter-salles ou reproduire des voies ouvertes par des grimpeurs connus.

Selon une caractéristique de l'invention, l'étape c) est exécutée de sorte que les motifs imprimés comportent :
- des premiers motifs, agencés pour orner le panneau de revêtement ;
- des deuxièmes motifs, agencés pour indiquer un plan de pose de chaque prise d'escalade.

Ainsi, un avantage procuré par les deuxièmes motifs est de faciliter le travail des poseurs, qui n'ont pas nécessairement des compétences en escalade.

Selon une caractéristique de l'invention, l'étape c) est précédée d'étapes consistant à :
c₀₁) prendre au moins une photographie numérique d'une voie d'escalade ouverte sur un mur d'escalade ;
c₀₂) définir les deuxièmes motifs à imprimer à partir de la photographie numérique ;
c₀₃) imprimer les deuxièmes motifs définis sur le panneau de revêtement.

Ainsi, un avantage procuré est la facilité d'obtention des deuxièmes motifs à partir d'un mur d'escalade « test ».

Selon une caractéristique de l'invention, la photographie numérique est ortho-rectifiée avant l'étape c₀₂).

Ainsi, un avantage procuré est de pouvoir corriger géométriquement les déformations dues à la perspective et au relief.

Selon une caractéristique de l'invention, l'étape c₀₁) est précédée d'une étape consistant à munir le mur d'escalade de repères, de préférence un quadrillage.

Ainsi, un avantage procuré est de pouvoir faciliter l'ortho-rectification de la photographie numérique prise lors de l'étape c₀₁).

Selon une caractéristique de l'invention, l'étape c) est précédée d'étapes consistant à :
c'₀₁) scanner en trois dimensions une voie d'escalade ouverte sur un mur d'escalade ;
c'₀₂) définir les deuxièmes motifs à imprimer à partir de la voie d'escalade scannée ;
c'₀₃) imprimer les deuxièmes motifs définis sur le panneau de revêtement.

Ainsi, un avantage procuré est de pouvoir obtenir les deuxièmes motifs par CAO (Conception Assistée par Ordinateur).

Selon une caractéristique de l'invention, le panneau de revêtement prévu lors de l'étape c) est réalisé dans un matériau sélectionné parmi un papier autocollant, un bois, l'aluminium, le polychlorure de vinyle, un aluminium composite.

Selon une caractéristique de l'invention, l'ossature est réalisée dans un matériau sélectionné parmi un bois et un matériau métallique.

Selon une caractéristique de l'invention, le panneau de structure est réalisé dans un matériau sélectionné parmi un bois et un matériau composite.

Selon une caractéristique de l'invention, le procédé comporte une étape consistant à munir le panneau de structure d'au moins un insert fileté, destiné à fixer une prise d'escalade au panneau de structure de manière amovible par vissage.

Selon une caractéristique de l'invention, le procédé comporte une étape consistant à munir le panneau de revêtement d'au moins un orifice traversant, agencé en regard de l'insert fileté.

Ainsi, un avantage procuré est de pouvoir facilement fixer la ou les prises d'escalade.

L'invention a également pour objet une structure artificielle d'escalade, comportant :
- une ossature ;
- au moins un panneau de structure montée sur l'ossature ;
- au moins un panneau de revêtement, comportant des motifs, et monté sur le panneau de structure de manière amovible ;
- au moins une prise d'escalade, montée sur le panneau de revêtement, et fixée au panneau de structure à travers le panneau de revêtement de manière amovible.

### Brève description des dessins

D'autres caractéristiques et avantages apparaîtront dans l'exposé détaillé de différents modes de réalisation de l'invention, l'exposé étant assorti d'exemples et de références aux dessins joints.
Figure 1 est une vue schématique partielle en coupe d'une structure artificielle d'escalade selon l'invention, illustrant une ossature et des panneaux de structure. Le ou les panneaux de revêtement et les prises d'escalade ne sont pas représentés.
Figure 2 est vue schématique partielle en perspective éclatée d'une structure artificielle d'escalade selon l'invention.
Figure 3 est une vue schématique en perspective d'un panneau de revêtement pour une structure artificielle d'escalade selon l'invention.
Figure 4a illustre une photographie numérique d'une voie d'escalade ouverte sur un mur d'escalade. Figure 4b illustre ladite photographie numérique ortho-rectifiée.

### Exposé détaillé des modes de réalisation

Les éléments identiques ou assurant la même fonction porteront les mêmes références pour les différents modes de réalisation, par souci de simplification.

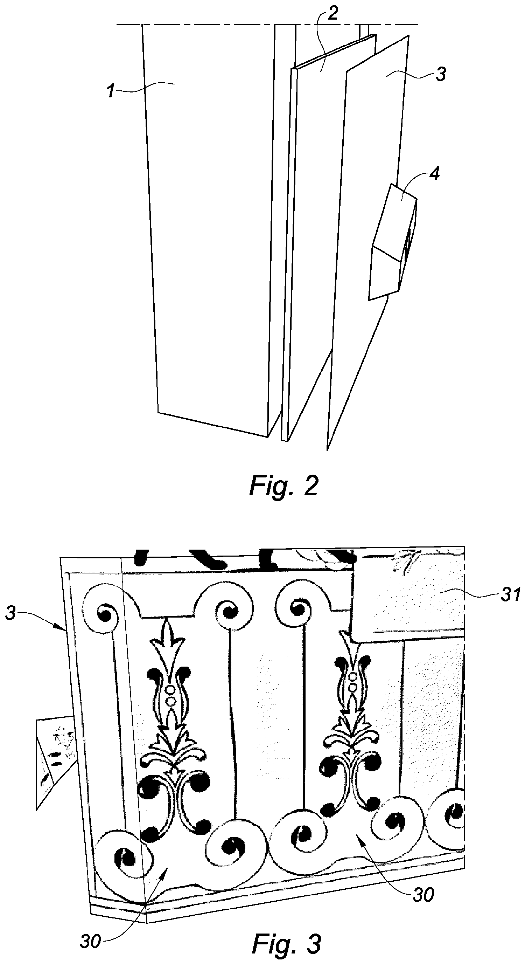

Comme illustré à la figure 2, un objet de l'invention est un procédé de fabrication d'une structure artificielle d'escalade, comportant les étapes :
a) prévoir une ossature 1, adaptée pour soutenir la structure artificielle d'escalade ;
b) monter au moins un panneau de structure 2 sur l'ossature 1 ;
c) prévoir au moins un panneau de revêtement 3, comportant des motifs 30, 31 (visibles à la figure 3) ;
d) monter le panneau de revêtement 3 sur le panneau de structure 2 de manière amovible ;
e) monter au moins une prise 4 d'escalade sur le panneau de revêtement 3 ;
f) fixer la prise 4 d'escalade au panneau de structure 2, à travers le panneau de revêtement 3, et de manière amovible.

### Ossature

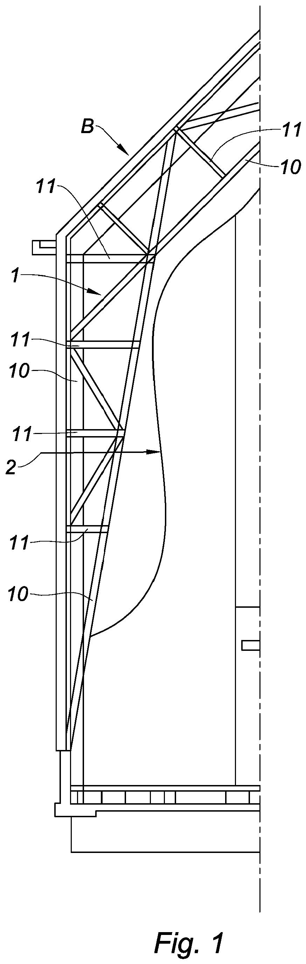

L'ossature 1 est avantageusement réalisée dans un matériau sélectionné parmi un bois et un matériau métallique. Comme illustré à la figure 1, l'ossature 1 peut comporter un ensemble de montants 10 et de traverses 11 agencé pour soutenir la structure artificielle d'escalade. L'ossature 1 peut être autoportée. A titre de variante, l'ossature 1 peut être fixée à un bâti B. A titre d'exemple, le bâti B peut être une salle d'un établissement.

### Panneau(x) de structure

Le ou chaque panneau de structure 2 est avantageusement réalisé dans un matériau sélectionné parmi un bois et un matériau composite. Le matériau composite est préférentiellement réalisé à partir d'une résine polyester. Le ou les panneaux de structure 2 présentent avantageusement une surface plane ou incurvée. Le ou les panneaux de structure 2 et l'ossature 1 confèrent une tenue mécanique à la structure artificielle d'escalade. Le ou les panneaux de structure 2 définissent la surface d'escalade.

Le procédé comporte avantageusement une étape consistant à munir le panneau de structure 2 d'au moins un insert fileté (non illustré), destiné à fixer une prise 4 d'escalade au panneau de structure 2 de manière amovible par vissage.

### Panneau(x) de revêtement

Le panneau de revêtement 3 prévu lors de l'étape c) est avantageusement réalisé dans un matériau sélectionné parmi un papier autocollant, un bois, l'aluminium, le polychlorure de vinyle, un aluminium composite. A titre d'exemple non limitatif, l'aluminium composite peut être le Dibond®. Le matériau dans lequel est réalisé le panneau de revêtement 3 est avantageusement adapté pour autoriser une impression sur le panneau de revêtement 3. Le matériau dans lequel est réalisé le panneau de revêtement 3 est léger par rapport au matériau dans lequel est réalisé le panneau de structure 2. Le matériau dans lequel est réalisé le panneau de revêtement 3 est de préférence facilement usinable. Le ou les panneaux de revêtement 3 présentent avantageusement une surface plane ou incurvée. Un panneau de revêtement 3 est avantageusement associé à un panneau de structure 2. Le panneau de revêtement 3 présente avantageusement une surface dont l'aire est égale à l'aire de la surface du panneau de structure 2. Le terme « égale » s'entend dans les tolérances usuelles liées aux conditions expérimentales de fabrication, et non parfaitement au sens mathématique du terme. Le panneau de revêtement 3 est avantageusement conformé (i.e. conformé géométriquement) pour recouvrir le panneau de structure 2. Autrement dit, la surface du panneau de revêtement 3 est avantageusement conformée pour recouvrir la surface du panneau de structure 2. La surface du panneau de revêtement 3 peut recouvrir en tout ou partie la surface du panneau de structure 2 au sens où la surface du panneau de revêtement 3 recouvre au moins 50%, de préférence au moins 80%, plus préférentiellement au moins 90% de la surface du panneau de structure 2. Le panneau de revêtement 3 présente avantageusement une section longitudinale quadrangulaire, de préférence rectangulaire ou carrée. Par « section longitudinale », on entend une section s'étendant suivant la hauteur de la structure artificielle d'escalade. Le panneau de revêtement 3 peut présenter une section longitudinale triangulaire.

Le ou les panneaux de revêtement 3 présentent une surface totale formant une surface décorative définissant le décor et le thème de la structure artificielle d'escalade. Dans l'état de la technique, cette fonction est assurée par le ou les panneaux de structure 2.

L'étape c) est avantageusement exécutée de sorte que les motifs 30, 31 sont solidaires mécaniquement du panneau de revêtement 3. L'étape c) est avantageusement exécutée de sorte que les motifs 30, 31 sont imprimés sur le panneau de revêtement 3. Les motifs 30, 31 sont avantageusement imprimés directement sur le panneau de revêtement 3.

Comme illustré à la figure 3, l'étape c) est avantageusement exécutée de sorte que les motifs 30, 31 imprimés comportent :
- des premiers motifs 30, agencés pour orner le panneau de revêtement 3 ;
- des deuxièmes motifs 31, agencés pour indiquer un plan de pose de chaque prise 4 d'escalade.

Les premiers motifs 30 peuvent tenir compte du plan de pose de chaque prise 4 d'escalade afin de les intégrer dans la scénographie. A titre d'exemples non limitatifs, les deuxièmes motifs 31 peuvent comporter une numérotation des prises 4 d'escalade, ou encore une nomenclature en donnant un angle et un numéro à chaque prise 4 d'escalade.

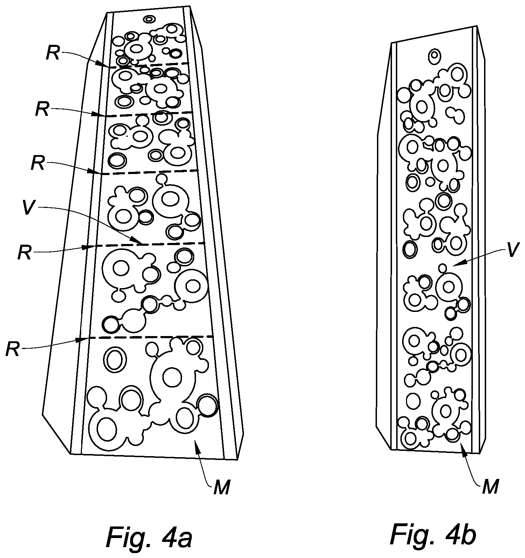

Selon un premier mode de mise en œuvre, l'étape c) est précédée d'étapes consistant à :
c₀₁) prendre au moins une photographie numérique d'une voie V d'escalade ouverte sur un mur M d'escalade (illustré à la figure 4a) ;
c₀₂) définir les deuxièmes motifs 31 à imprimer à partir de la photographie numérique ;
c₀₃) imprimer les deuxièmes motifs 31 définis sur le panneau de revêtement 3.

La photographie numérique prise lors de l'étape c₀₁) est avantageusement une photographie de face de la voie V d'escalade. Il est également possible de prendre plusieurs photographies numériques de la voie V d'escalade avec des angles différents de prise de vue. La photographie numérique prise lors de l'étape c₀₁) est avantageusement ortho-rectifiée avant l'étape c₀₂).L'ortho-rectification de la photographie numérique peut être mise en œuvre par ordinateur. Comme illustré à la figure 4b, l'ortho-rectification permet un redressement de plan. L'étape c₀₁) est avantageusement précédée d'une étape consistant à munir le mur d'escalade de repères R, de préférence un quadrillage. Les repères R peuvent être des traits pointillés.

Selon un deuxième mode de mise en œuvre, l'étape c) est précédée d'étapes consistant à :
c'₀₁) scanner en trois dimensions une voie V d'escalade ouverte sur un mur M d'escalade ;
c'₀₂) définir les deuxièmes motifs 31 à imprimer à partir de la voie V d'escalade scannée ;
c'₀₃) imprimer les deuxièmes motifs 31 définis sur le panneau de revêtement 3.

Le procédé comporte avantageusement une étape consistant à munir le panneau de revêtement 3 d'au moins un orifice traversant (non illustré), agencé en regard de l'insert fileté. Le ou les panneaux de revêtement 3 peuvent être pré-percés afin de faciliter le montage ultérieur des prises 4 d'escalade aux inserts filetés.

Le ou les panneaux de revêtement 3 sont avantageusement montés amovibles sur le ou les panneaux de structure 2 par vissage.

### Structure artificielle d'escalade

Un objet de l'invention est une structure artificielle d'escalade, comportant les caractéristiques de la revendication 13.

## Revendications

1. Procédé de fabrication d'une structure artificielle d'escalade, comportant les étapes :
a) prévoir une ossature (1), adaptée pour soutenir la structure artificielle d'escalade ;
b) monter au moins un panneau de structure (2) sur l'ossature (1) ;
c) prévoir au moins un panneau de revêtement (3), comportant des motifs (30, 31), le ou les panneaux de revêtement (3) présentant une surface totale définissant le décor et le thème de la structure artificielle d'escalade ;
d) monter le panneau de revêtement (3) sur le panneau de structure (2) de manière amovible, le panneau de revêtement (3) étant conformé géométriquement pour recouvrir au moins 50% de la surface du panneau de structure (2) ;
e) monter au moins une prise (4) d'escalade sur le panneau de revêtement (3) ;
f) fixer la prise (4) d'escalade au panneau de structure (2), à travers le panneau de revêtement (3), et de manière amovible.

2. Procédé selon la revendication 1, dans lequel l'étape c) est exécutée de sorte que les motifs (30, 31) sont imprimés sur le panneau de revêtement (3).

3. Procédé selon la revendication 2, dans lequel l'étape c) est exécutée de sorte que les motifs (30, 31) imprimés comportent :
- des premiers motifs (30), agencés pour orner le panneau de revêtement (3) ;
- des deuxièmes motifs (31), agencés pour indiquer un plan de pose de chaque prise (4) d'escalade.

4. Procédé selon la revendication 3, dans lequel l'étape c) est précédée d'étapes consistant à :
c₀₁) prendre au moins une photographie numérique d'une voie (V) d'escalade ouverte sur un mur (M) d'escalade ;
c₀₂) définir les deuxièmes motifs (31) à imprimer à partir de la photographie numérique ;
c₀₃) imprimer les deuxièmes motifs (31) définis sur le panneau de revêtement (3).

5. Procédé selon la revendication 4, dans lequel la photographie numérique est ortho-rectifiée avant l'étape c₀₂).

6. Procédé selon la revendication 4 ou 5, dans lequel l'étape c₀₁) est précédée d'une étape consistant à munir le mur (M) d'escalade de repères (R), de préférence un quadrillage.

7. Procédé selon la revendication 3, dans l'étape c) est précédée d'étapes consistant à :
c'₀₁) scanner en trois dimensions une voie (V) d'escalade ouverte sur un mur (M) d'escalade ;
c'₀₂) définir les deuxièmes motifs (31) à imprimer à partir de la voie (V) d'escalade scannée ;
c'₀₃) imprimer les deuxièmes motifs (31) définis sur le panneau de revêtement (3).

8. Procédé selon l'une des revendications 1 à 7, dans lequel le panneau de revêtement (3) prévu lors de l'étape c) est réalisé dans un matériau sélectionné parmi un papier autocollant, un bois, l'aluminium, le polychlorure de vinyle, un aluminium composite.

9. Procédé selon l'une des revendications 1 à 8, dans lequel l'ossature (1) est réalisée dans un matériau sélectionné parmi un bois et un matériau métallique.

10. Procédé selon l'une des revendications 1 à 9, dans lequel le panneau de structure (2) est réalisé dans un matériau sélectionné parmi un bois et un matériau composite.

11. Procédé selon l'une des revendications 1 à 10, comportant une étape consistant à munir le panneau de structure (2) d'au moins un insert fileté, destiné à fixer une prise (4) d'escalade au panneau de structure (2) de manière amovible par vissage.

12. Procédé selon la revendication 11, comportant une étape consistant à munir le panneau de revêtement (3) d'au moins un orifice traversant, agencé en regard de l'insert fileté.

13. Structure artificielle d'escalade, comportant :
- une ossature (1) ;
- au moins un panneau de structure (2) montée sur l'ossature (1) ;
- au moins un panneau de revêtement (3), comportant des motifs (30, 31), et monté sur le panneau de structure (2) de manière amovible ; le panneau de revêtement (3) étant conformé géométriquement pour recouvrir au moins 50% de la surface du panneau de structure (2) ; le ou les panneaux de revêtement (3) présentant une surface totale définissant le décor et le thème de la structure artificielle d'escalade ;
- au moins une prise (4) d'escalade, montée sur le panneau de revêtement (3), et fixée au panneau de structure (2) à travers le panneau de revêtement (3) de manière amovible.

## Patentansprüche

1. Verfahren zur Herstellung einer künstlichen Kletterstruktur, aufweisend die Schritte:
a) Vorsehen eines Gerüsts (1), das geeignet ist, die künstliche Kletterstruktur zu tragen;
b) Anbringen mindestens einer Strukturplatte (2) am Gerüst (1);
c) Vorsehen mindestens einer Belagplatte (3) mit Motiven (30, 31), wobei die Belagplatte(n) (3) eine Gesamtfläche aufweist bzw. aufweisen, die das Dekor und das Thema der künstlichen Kletterstruktur definieren;
d) Anbringen der Belagplatte (3) an der Strukturplatte (2) auf abnehmbare Weise, wobei die Belagplatte (3) geometrisch dazu ausgebildet ist, mindestens 50 % der Fläche der Strukturplatte (2) abzudecken;
e) Anbringen mindestens eines Klettergriffs (4) an der Belagplatte (3);
f) Befestigen des Klettergriffs (4) an der Strukturplatte (2) durch die Belagplatte (3) und auf abnehmbare Weise.

2. Verfahren nach Anspruch 1, wobei der Schritt c) so ausgeführt wird, dass die Motive (30, 31) auf der Belagplatte (3) gedruckt sind.

3. Verfahren nach Anspruch 2, wobei der Schritt c) so ausgeführt wird, dass die gedruckten Motive (30, 31) Folgendes aufweisen:
- erste Motive (30), die angeordnet sind, die Belagplatte (3) zu verzieren;
- zweite Motive (31), die angeordnet sind, einen Anbauplan jedes Klettergriffs (4) anzuzeigen.

4. Verfahren nach Anspruch 3, wobei dem Schritt c) Schritte vorangehen, die Folgendes aufweisen:
c₀₁) Aufnehmen mindestens einer digitalen Fotografie einer offenen Kletterroute (V) an einer Kletterwand (M);
c₀₂) Definieren der zu druckenden zweiten Motive (31) anhand der digitalen Fotografie;
c₀₃) Drucken der definierten zweiten Motive (31) auf die Belagplatte (3).

5. Verfahren nach Anspruch 4, wobei die digitale Fotografie vor dem Schritt c₀₂) orthorektifiziert wird.

6. Verfahren nach Anspruch 4 oder 5, wobei dem Schritt c₀₁) ein Schritt vorangeht, der darin besteht, die Kletterwand (M) mit Markierungen (R) zu versehen, vorzugsweise mit einem Gitternetz.

7. Verfahren nach Anspruch 3, im Schritt c) Schritte vorangehen, die Folgendes aufweisen:
c'₀₁) dreidimensionales Scannen einer offenen Kletterroute (V) an einer Kletterwand (M);
c'₀₂) Definieren der zu druckenden zweiten Motive (31) anhand der gescannten Kletterroute (V);
c'₀₃) Drucken der definierten zweiten Motive (31) auf die Belagplatte (3).

8. Verfahren nach einem der Ansprüche 1 bis 7, wobei die Belagplatte (3), die beim Schritt c) vorgesehen wird, aus einem Material hergestellt ist, das aus einem selbstklebenden Papier, einem Holz, Aluminium, Polyvinylchlorid, einem Aluminium-Verbund ausgewählt ist.

9. Verfahren nach einem der Ansprüche 1 bis 8, wobei das Gerüst (1) aus einem Material hergestellt ist, das aus einem Holz und einem Metallmaterial ausgewählt ist.

10. Verfahren nach einem der Ansprüche 1 bis 9, wobei die Strukturplatte (2) aus einem Material hergestellt ist, das aus einem Holz und einem Verbundmaterial ausgewählt ist.

11. Verfahren nach einem der Ansprüche 1 bis 10, aufweisend einen Schritt, der darin besteht, die Strukturplatte (2) mit mindestens einem Gewindeeinsatz zu versehen, der dazu bestimmt ist, einen Klettergriff (4) durch Verschraubung auf abnehmbare Weise an der Strukturplatte (2) zu befestigen.

12. Verfahren nach Anspruch 11, aufweisend einen Schritt, der darin besteht, die Belagplatte (3) mit mindestens einer Durchgangsöffnung zu versehen, die gegenüber dem Gewindeeinsatz angeordnet ist.

13. Künstliche Kletterstruktur, aufweisend:
- ein Gerüst (1);
- mindestens eine Strukturplatte (2), die am Gerüst (1) angebracht ist;
- mindestens eine Belagplatte (3), die Motive (30, 31) aufweist und auf abnehmbare Weise an der Strukturplatte (2) angebracht ist; wobei die Belagplatte (3) geometrisch dazu ausgebildet ist, mindestens 50 % der Fläche der Strukturplatte (2) abzudecken; wobei die Belagplatte(n) (3) eine Gesamtfläche aufweist bzw. aufweisen, die das Dekor und das Thema der künstlichen Kletterstruktur definieren;
- mindestens einen Klettergriff (4), der an der Belagplatte (3) angebracht und an der Strukturplatte (2) durch die Belagplatte (3) auf abnehmbare Weise befestigt ist.

## Claims

1. Method for manufacturing an artificial climbing structure, comprising the steps of:
a) providing a framework (1), suitable for supporting the artificial climbing structure;
b) mounting at least one structural panel (2) on the framework (1);
c) providing at least one coating panel (3), comprising patterns (30, 31), the coating panel or panels (3) having a total surface defining the set and the theme of the artificial climbing structure;
d) mounting the coating panel (3) on the structural panel (2) removably, the coating panel (3) being conformed geometrically to cover at least 50% of the surface of the structural panel (2);
e) mounting at least one climbing grip (4) on the coating panel (3);
f) fixing the climbing grip (4) to the structural panel (2), through the coating panel (3), and removably.

2. Method according to Claim 1, wherein the step c) is executed such that the patterns (30, 31) are printed on the coating panel (3).

3. Method according to Claim 2, wherein the step c) is executed such that the printed patterns (30, 31) comprise:
- first patterns (30), arranged to ornament the coating panel (3);
- second patterns (31), arranged to indicate a mounting plane for each climbing grip (4).

4. Method according to Claim 3, wherein the step c) is preceded by steps consisting in:
c₀₁) taking at least one digital photograph of an open climbing path (V) on a climbing wall (M);
c₀₂) defining the second patterns (31) to be printed from the digital photograph;
c₀₃) printing the defined second patterns (31) on the coating panel (3).

5. Method according to Claim 4, wherein the digital photograph is differentially rectified before the step c₀₂).

6. Method according to Claim 4 or 5, wherein the step c₀₁) is preceded by a step consisting in providing the climbing wall (M) with markers (R), preferably a grid.

7. Method according to Claim 3, in the step c) is preceded by steps consisting in:
c'₀₁) scanning in three dimensions an open climbing path (V) on a climbing wall (M);
c'₀₂) defining the second patterns (31) to be printed from the scanned climbing path (V);
c'₀₃) printing the defined second patterns (31) on the coating panel (3).

8. Method according to one of Claims 1 to 7, wherein the coating panel (3) provided in the step c) is produced in a material selected from among a self-adhesive paper, a wood, aluminium, polyvinyl chloride, a composite aluminium.

9. Method according to one of Claims 1 to 8, wherein the framework (1) is produced in a material selected from among a wood and a metal material.

10. Method according to one of Claims 1 to 9, wherein the structural panel (2) is produced in a material selected from among a wood and a composite material.

11. Method according to one of Claims 1 to 10, comprising a step consisting in providing the structural panel (2) with at least one threaded insert, intended to fix a climbing grip (4) to the structural panel (2), removably by screwing.

12. Method according to Claim 11, comprising a step consisting in providing the coating panel (3) with at least one through-orifice, arranged opposite the threaded insert.

13. Artificial climbing structure, comprising:
- a framework (1);
- at least one structural panel (2) mounted on the framework (1);
- at least one coating panel (3), comprising patterns (30, 31), and mounted on the structural panel (2) removably; the coating panel (3) being conformed geometrically to cover at least 50% of the surface of the structural panel (2); the coating panel or panels (3) having a total surface defining the set and the theme of the artificial climbing structure;
- at least one climbing grip (4), mounted on the coating panel (3), and fixed to the structural panel (2) through the coating panel (3), removably.
